# EUROPEAN PATENT APPLICATION

(11) **EP 4 053 770 A1**
(43) Date of publication of application: **07.09.2022**
(21) Application number: 21200058.2
(22) Date of filing: 30.09.2021
(51) Int. Cl.: G06Q 10/10, H04L 12/18, H04L 51/04

(54) **SCHEDULE INFORMATION ACQUIRING METHOD, APPARATUS, DEVICE, STORAGE MEDIUM AND PROGRAM**

(30) Priority: 05.03.2021 CN 202110247179
(71) Applicant: BEIJING BAIDU NETCOM SCIENCE TECHNOLOGY CO., LTD., No. 10 Shangdi 10th Street Haidian District Beijing 100085 (CN)
(72) Inventor: YAO, Xiangmin, Beijing (CN); YE, Feng, Beijing (CN); LI, Hao, Beijing (CN); WANG, Baowei, Beijing (CN)
(74) Representative: J A Kemp LLP

(57) **Abstract**

The present application discloses to a schedule information acquiring method, an apparatus, a device, a storage medium and a program product, which relates to the artificial intelligence field. The method includes: acquiring multiple subscription identification information respectively corresponding to multiple service instances; for each subscription identification information corresponding to each service instance, requesting schedule information corresponding to the subscription identification information from a first server end through the service instance; and sending the schedule information to a terminal corresponding to the subscription identification information. The method realizes synchronization of schedule information.

## Description

### TECHNICAL FIELD

The present application relates to computer technology, in particular to a schedule information acquiring method, an apparatus, a device, a storage medium and a program product, which can be used in the artificial intelligence field.

### BACKGROUND

At present, with the development of smart office technology, many office scenarios are migrated to online operations, and many office tasks are completed online.

Schedule management is an important issue in office scenarios. Many companies are using mailbox-based schedule management, such as outlook-based schedule management. At the same time, many companies also use some other applications for instant messaging, transaction processing, schedule management, and so on. One problem this can cause is that when office workers use mailbox-based schedule management and schedule management in other applications at the same time, various schedule information cannot be effectively synchronized.

### SUMMARY

The present application provides a schedule information acquiring method, an apparatus, a device, a storage medium and a program product to realize synchronization of schedule information.

According to an aspect of the present application, a schedule information acquiring method is provided, including:
acquiring multiple subscription identification information respectively corresponding to multiple service instances;
for each subscription identification information corresponding to each service instance, requesting schedule information corresponding to the subscription identification information from a first server end through the service instance; and
sending the schedule information to a terminal corresponding to the subscription identification information.

According to another aspect of the present application, a schedule information acquiring apparatus is provided, including:
an acquiring module, configured to acquire multiple subscription identification information respectively corresponding to multiple service instances;
a subscription module, configured to, for each subscription identification information corresponding to each service instance, request schedule information corresponding to the subscription identification information from a first server end through the service instance; and
a sending module, configured to send the schedule information to a terminal corresponding to the subscription identification information.

According to further aspect of the present application, an electronic device is provided, including:
at least one processor; and
a memory communicatively connected with the at least one processor; where,
the memory stores instructions executable by the at least one processor, and the instructions are executed by the at least one processor, to cause the at least one processor to perform the method described in the first aspect.

According to further aspect of the present application, a non-transitory computer-readable storage medium storing thereon computer instructions is provided, where the computer instructions are used to cause a computer to perform the method described in the first aspect.

According to further aspect of the present application, a computer program product is provided, the computer program product includes a computer program, the computer program is stored in a readable storage medium, at least one processor of an electronic device may read the computer program from the readable storage medium, and the at least one processor executes the computer program to cause the electronic device to execute the method described in the first aspect.

According to the technical solution of the present application, synchronization of the schedule information of the user is realized.

It should be understood that the content described in this section is not intended to identify key or important features of the embodiments of the present application, nor is it intended to limit the scope of the present application. Other features of the present application will be easily understood through the following description.

### BRIEF DESCRIPTION OF DRAWINGS

The accompanying drawings are used to better understand solutions, and do not limit the present application. In the accompanying drawings:
FIG. 1 is a schematic diagram of an application scenario of a schedule information acquiring method according to an embodiment of the present application;
FIG. 2 is a schematic flowchart of a schedule information acquiring method according to an embodiment of the present application;
FIG. 3 is a schematic structural diagram of a schedule information acquiring apparatus according to an embodiment of the present application; and
FIG. 4 is a schematic block diagram of an electronic device used to implement a schedule information acquiring method according to an embodiment of the present application.

### DESCRIPTION OF EMBODIMENTS

The following describes exemplary embodiments of the present application in combination with the accompanying drawings, in which various details of the embodiments of the present application are included to facilitate understanding, and they shall be considered as merely exemplary. Therefore, those skilled in the art should realize that various changes and modifications can be made to the embodiments described herein without departing from the scope of the present application. Similarly, for the sake of clarity and conciseness, the description of well-known functions and structures is omitted in the following.

Mailbox-based schedule management, for example, schedule management based on the outlook is currently a widely used schedule management method. Many users use outlook's schedule management to make conference reservations, reminders, and so on. At the same time, many companies currently use some applications other than mailboxes for daily office work. For example, users use applications installed on the terminal, such as instant messaging tools, for communication and schedule management, etc. The terminal may be a mobile terminal, a personal computer, a smart wearable device, etc. With the increasing number of application scenarios of these applications, and due to the independence between the schedule information on the application and the commonly used outlook schedule information, various schedule information cannot be effectively synchronized, which may result in low processing efficiency or information omission.

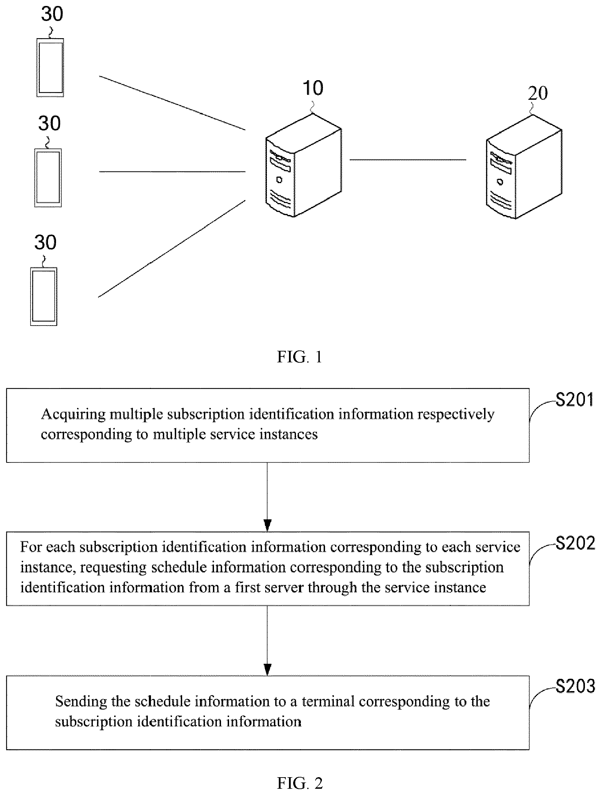

For this reason, an embodiment of the present application provides a schedule information acquiring method, which may be applied to a server end of the application other than the mailbox used by the user described above, and the server end may include one or more physical host, the server end may also be a cloud server, also known as a cloud computing server or a cloud host, which is not limited in the embodiment of the present application. FIG. 1 is a schematic diagram of an application scenario of a schedule information acquiring method according to an embodiment of the present application. There are multiple service instances deployed on an application server end 10. The service instance may be used to subscribe to other schedule server end 20 for other schedule information other than the application. For example, the other schedule server end 20 is an outlook server end. For a user, the application server end 10 requests the outlook server end to acquire outlook schedule information of the user, and after acquiring the schedule information, sends the schedule information to a terminal 30 of the user, and the above application is installed on the terminal 30, so that the user may view the outlook schedule information through the application on the terminal 30. Since there may be many users who need to use application to subscribe to other schedule information, in order to ensure stability, each service instance in the server end 10 manages some users to achieve load balancing.

Hereinafter, the schedule information acquiring method according to the present application will be described in detail through specific embodiments. It should be understood that the following specific embodiments can be combined with each other, and the same or similar concepts or processes may not be repeated in some embodiments. In the technical solution of the present disclosure, the acquisition, storage, and application of the user's personal information involved are in compliance with relevant laws and regulations, and do not violate public order and moral.

FIG. 2 is a schematic flowchart of a schedule information acquiring method according to an embodiment of the present application. As shown in FIG. 2, the method includes:
S201: acquiring multiple subscription identification information respectively corresponding to multiple service instances.

The multiple service instances in the embodiment are service instances deployed on the application server end to complete other schedule subscriptions other than the application. Taking the application as instant messaging software as an example, the service instance is a service instance deployed on an instant messaging software server end, and the service instance is used to request other schedule server end to subscribe to schedule information provided by the other schedule server end. Two or more of the multiple service instances may be deployed on the same physical host or multiple physical hosts, or may also be deployed on a cloud server. The number of the service instances may be configured as required, the embodiment of the present application do not limit this.

Each service instance in the multiple service instances is used to process schedule subscription services of a part of subscribers, that is, each service instance respectively corresponds to multiple subscription identification information, each subscription identification information identifies a subscriber, and each service instance needs to acquire corresponding multiple subscription identification information, that is, each service instance processes the corresponding schedule subscription services of multiple subscribers, and performs schedule subscription according to the subscription identification information of each subscriber.

S202: for each subscription identification information corresponding to each service instance, requesting schedule information corresponding to the subscription identification information from a first server end through the service instance.

The first server end is the other schedule information server end other than the application described above. For example, the application is an instant messaging software, and the first server end is an outlook server end. For each subscription identification information corresponding to each service instance, the instant messaging software server end requests the outlook schedule information of the subscriber corresponding to the subscription identification information from the outlook schedule server end through the service instance.

S203: sending the schedule information to a terminal corresponding to the subscription identification information.

Exemplary, after acquiring the outlook schedule information corresponding to each subscription identification information, sending the outlook schedule information corresponding to each subscription identification information to the terminal corresponding to the subscription identification information (i.e. the terminal of the subscriber corresponding to the subscription identification information) through the service instance, so that the subscriber may view the outlook schedule information through the application installed on the terminal.

The schedule information acquiring method provided in the embodiment, with the multiple service instances in the application server, by requesting the first server end for the schedule information corresponding to the subscription identification information corresponding to each service instance, and sending the schedule information to the terminal of the subscription identification information, realizes a balanced processing of the schedule subscription service by multiple service instances, so that the subscriber may view other schedule information other than which of the application provided by the first server end through the application, thereby realizing a synchronization of the schedule information.

On the basis of the above embodiment, the subscription identification information managed respectively by the multiple service instances of the application server end is explained. Optionally, the acquiring multiple subscription identification information respectively corresponding to multiple service instances in S201 of the above embodiment includes:
acquiring the number of the service instances and the number of copies, where the number of the copies is used to indicate the number of the service instances corresponding to the same subscription identification information; acquiring the number of groups, and grouping all the subscription identification information according to the number of the groups; and determining the grouped multiple subscription identification information respectively corresponding to the multiple service instances according to the number of the service instances, the number of the copies, and the number of the groups.

In order to ensure the load balancing of the service instances, in the embodiment, the subscription identification information is grouped, that is, the subscribers are grouped, and the grouped subscription identification information is distributed to the multiple service instances according to the number of the service instances and the number of the copies. The number of the copies can be set according to actual needs. It should be noted that the number of the copies should be less than the number of the service instances. For example, if the number of the copies is 2, it means that one piece of subscription identification information is on two service instances, and both service instances may complete the schedule subscription corresponding to the subscription identification information. With this backup scheme, a stability of the schedule subscription can be guaranteed.

Optionally, after the subscription identification information is grouped, a target number is determined according to the number of the groups, the number of the copies, and the number of the service instances; all the groups are divided into multiple shards, where each shard includes different groups of the target number, the number of times that each group appears in all shards is the number of the copies; and an identification of the service instance corresponding to each shard is determined, and the subscription identification information included in each shard is distributed to the corresponding service instance according to the identification of the service instance.

The number of the shards is the number of the service instances, and each shard corresponds to one service instance. The target number of the groups included in each shard is the target number of the groups corresponding to each service instance. Optionally, the target number is the number of the groups multiplied by the number of the copies and then divided by the number of the service instances.

For example, the number of the service instances is 6, the number of the copies is 2, and the number of the groups is 6. For example, the 6 groups are A, B, C, D, E, F, and the subscription identification information of the 6 groups may be stored in a redis database, then the target number is 2, that is, each shard includes 2 different groups. Since the number of the copies is 2, the number of times that each group appears in all the shards is 2.

Optionally, when determining the group included in the shard, the distribution may be performed according to a loop distribution method. Continue to refer to the above example, AB, BC, CD, DE, EF, and FA are respectively distributed to 6 service instances as a shard. Optionally, an service instance identification corresponding to AB is 1, an service instance identification corresponding to BC is 2, an service instance identification corresponding to CD is 3, an service instance identification corresponding to DE is 4, an service instance identification corresponding to EF is 5, and an service instance identification corresponding to FA is 6. Therefore, when determining the multiple subscription identification information corresponding to each service example, the subscription identification information included in each shard may be distributed to the corresponding service instance according to the identification of the service instance. Thus, the group distribution of subscribers is realized, and the load balancing of service instances is achieved, so that each service instance can acquire the groups managed by each service instance, and the stability of the subscription service can be guaranteed.

On the basis of the above embodiment, further explanation will be given in combination with the actual scenario when the service instance is running. First, when the service instance is started, there may be two situations which is that the service instance is successfully started and unsuccessfully started. In addition, after the service instance is successfully started and runs for a period of time, there may be a situation where the service instance stops running due to a failure or other reasons. Further, for a service instance that is not successfully started, or a service instance that stops running after running for a period of time, there may be a situation where it is restarted successfully. The following will describe these situations.

An identification of a successfully started service instance is determined according to a starting order of the service instances; and a shard corresponding to the successfully started service instance is distributed to the successfully started service instance according to the identification of the service instance corresponding to each shard and the identification of the successfully started service instance.

A group corresponding to a first service instance is distributed to the successfully started service instance one by one, where the group corresponding to one successfully started service instance does not include the same group corresponding to the first service instance, and the first service instance is a service instance that is not successfully started or a service instance that has been successfully started and stopped after a period of time. After the first service instance is successfully started again, it is requested to acquire a group corresponding to the first service instance from other successfully started service instances one by one.

The service instance is registered in a database when the service instance is started. For example, as described in the embodiment of the present application, the subscription identification information groups are stored in the redis database, then the service instance is registered in the redis when the service instance is started, so that the identification of the service instance may be determined according to the starting order of the services, i.e. an order in which the service instances are registered in the redis. Referring to the above example, it is assumed that 4 of the 6 service instances are successfully started, and the identifications of the 4 service instances are 1, 2, 3, and 4 according to the starting order, then AB, BC, CD, and DE are distributed to these 4 successfully started service instances respectively, thereby ensuring the load balancing of the successfully started service instances.

Since two service instances have not been successfully started, EF and FA have not been distributed to the service instance. In order to ensure that the schedule subscriptions of the subscribers in these groups are normal, it is necessary to distribute these groups to the successfully started service instances one by one. Optionally, a clockwise distribution method is used to distribute these groups to the successfully started service instances. For example, E is distributed to service instance 1, F is distributed to service instance 2, F is distributed to service instance 3, and A is distributed to service instance 4, thereby ensuring the load balancing among the service instances.

For the service instance that stop running after running for a period of time, for example, 6 service instances are successfully started and distributed with AB, BC, CD, DE, EF, and FA in sequence, after running for a period of time, service instance 5 stops running due to failure, then the groups E and F corresponding to service instance 5 need to be distributed to other service instances that are still running one by one. Optionally, the clockwise distribution method is used for distribution, then E is distributed to service instance 6 and F is distributed to service instance 1.

It should be noted that when distributing the undistributed group to other successfully started service instance one by one according to the clockwise distribution method described above, it is necessary to ensure that there is no same group on the successfully started service instance. If the undistributed group already exists on a successfully started service instance, then it continues to select a next service instance until the undistributed group is configured on a service instance, which, therefore, ensures that in the process of service dynamic changes, each group can be configured to a surviving service instance according to the configured number of copies, ensures that the schedule subscription of each subscriber can be processed by multiple service instances, and ensures the stability of the service.

Each service instance records its original distributed group and a redistributed group, so that after the service instance that has been not successfully started or the service instance that has stopped running after running for a period of time are successfully started again, these service instances which are successfully started again may retrieve its corresponding group from the other service instances. Referring to the above distribution method, these service instances which are successfully started again can search from other service instances one by one in clockwise manner until it finds its corresponding group, and the group does not belong to other service instances, which, therefore ensures that in the process of service dynamic changes, load balancing can be maintained among various service instances, and ensures that each service instance can complete the schedule subscription of the subscriber corresponding to the service instance stably.

In the above embodiment, it is explained that each subscription identification information is distributed to multiple service instances according to the number of the copies, so that the multiple service instances may process the schedule subscription of the same subscriber. Optionally, in order to avoid duplicate information, the schedule information corresponding to the same subscription identification information acquired by the service instances with the same group is sent to the terminal corresponding to the subscription identification information after the schedule information is de-duplicated, which ensures an accuracy of the information displayed by the terminal and avoids information redundancy.

Optionally, for the service instances with the same group, if one of the service instances has already processed the schedule subscription of the subscriber corresponding to certain subscription identification information, the other service instances do not need to process again, thereby avoiding the duplicate schedule information.

Optionally, the service instances with the same group may send the acquired schedule information corresponding to the same subscription identification information to the terminal corresponding to the subscription identification information for the terminal to display the schedule information after de-duplicating the schedule information.

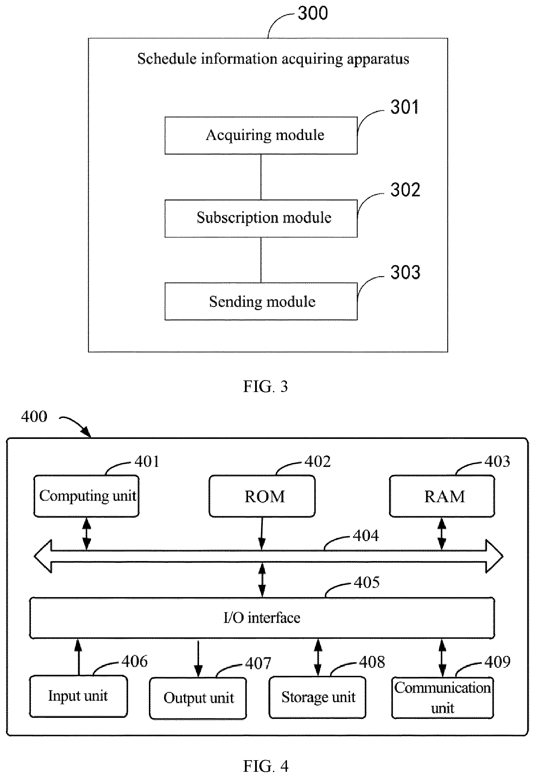

FIG. 3 is a schematic structural diagram of a schedule information acquiring apparatus according to an embodiment of the present application. As shown in FIG. 3, the schedule information acquiring apparatus 300 includes:
an acquiring module 301, configured to acquire multiple subscription identification information respectively corresponding to multiple service instances;
a subscription module 302, configured to, for each subscription identification information corresponding to each service instance, request schedule information corresponding to the subscription identification information from a first server end through the service instance; and
a sending module 303, configured to send the schedule information to a terminal corresponding to the subscription identification information.

Optionally, the acquiring module 301 includes:
a first acquiring unit, configured to acquire the number of the service instances and the number of copies, where the number of the copies is used to indicate the number of the service instances corresponding to the same subscription identification information;
a second acquiring unit, configured to acquire the number of groups, and grouping all the subscription identification information according to the number of the groups; and
a determining unit, configured to determine the grouped multiple subscription identification information respectively corresponding to the multiple service instances according to the number of the service instances, the number of the copies, and the number of the groups.

Optionally, the determining unit includes:
a first determining subunit, configured to determine a target number according to the number of the groups, the number of the copies, and the number of the service instances;
a sharding unit, configured to divide all the groups into multiple shards, where each shard includes different groups of the target number, the number of times that each group appears in all shards is the number of the copies; and
a distributing unit, configured to determine an identification of the service instance corresponding to each shard, and distribute the subscription identification information included in each shard to the corresponding service instance according to the identification of the service instance.

Optionally, the distributing unit includes:
a second determining subunit, configured to determine an identification of a successfully started service instance according to a starting order of the service instances;
a first distributing subunit, configured to distribute a shard corresponding to the successfully started service instance to the successfully started service instance according to the identification of the service instance corresponding to each shard and the identification of the successfully started service instance.

Optionally, the schedule information acquiring apparatus 300 further includes:
a second distributing subunit, configured to distribute a group corresponding to a first service instance to the successfully started service instance one by one, where the group corresponding to one successfully started service instance does not include the same group corresponding to the first service instance, and the first service instance is a service instance that is not successfully started or a service instance that has been successfully started and stopped after a period of time.

Optionally, the schedule information acquiring apparatus 300 further includes:
a third distributing subunit, configured to request to acquire a group corresponding to the first service instance from other successfully started service instances one by one after the first service instance is successfully started again.

Optionally, the sending module 303 includes:
a sending unit, configured to send the schedule information acquired by the service instances with the same group to the terminal corresponding to the subscription identification information after the schedule information is de-duplicated.

The schedule information acquiring apparatus provided in the embodiment of the present application can be used to execute the schedule information acquiring method in any of the above method embodiment, their implementation principles and technical effects are similar, and will not be repeated here.

According to an embodiment of the present application, an electronic device and a non-transitory computer-readable storage medium storing computer instruction are further provided.

According to an embodiment of the present application, a computer program product is further provided, the program product includes: a computer program, the computer program is stored in a readable storage medium, at least one processor of an electronic device may read the computer program from the readable storage medium, and the at least one processor executes the computer program which enables the electronic device to execute the solution provided by any of the above embodiments.

FIG. 4 is a schematic block diagram of an electronic device used to implement a schedule information acquiring method according to an embodiment of the present application. The electronic device is intended to represent various forms of digital computers, such as a laptop computer, a desktop computer, a workstation, a personal digital assistant, a server, a blade server, a mainframe computer, and other suitable computers. The electronic device may also represent various forms of mobile apparatuses, such as a personal digital assistant, a cellular phone, a smart phone, a wearable device, and other similar computing apparatuses. Components shown herein, connections and relationships thereof, as well as functions thereof are merely examples and are not intended to limit implementations of the present application described and/or claimed herein.

As shown in FIG. 4, the electronic device 400 includes a computing unit 401, which can perform various appropriate actions and processing based on the computer program stored in a read only memory (ROM) 402 or the computer program loaded from a storage unit 408 to a random access memory (RAM) 403. In the RAM 403, various programs and data required for the operation of the device 400 can also be stored. The calculation unit 401, the ROM 402, and the RAM 403 are connected to each other through a bus 404. An input/output (I/O) interface 405 is also connected to the bus 404.

Multiple components in the device 400 are connected to the I/O interface 405, including: an input unit 406, such as a keyboard, a mouse, etc.; an output unit 407, such as various types of displays, speakers, etc.; a storage unit 408, such as a disk, optical disc, etc.; and a communication unit 409, such as network card, modem, wireless communication transceiver, etc. The communication unit 409 allows the device 400 to exchange information/data with other devices through a computer network such as the Internet and/or various telecommunication networks.

The computing unit 401 may be various general-purpose and/or special-purpose processing components with processing and computing capabilities. Some examples of the computing unit 401 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, etc. The calculation unit 401 executes the various methods and processes described above, for example, a schedule information acquiring method. For example, in some embodiments, the schedule information acquiring method may be implemented as a computer software program, which is tangibly contained in a machine-readable medium, such as the storage unit 408. In some embodiments, part or all of computer program may be loaded and/or installed on the device 400 via the ROM 402 and/or the communication unit 409. When the computer program is loaded into the RAM 403 and executed by the computing unit 401, one or more steps of the schedule information acquiring method described above can be executed. Alternatively, in other embodiments, the computing unit 401 may be configured to execute the schedule information acquiring method in any other suitable manner (for example, by means of firmware).

The various implementations of the systems and technologies described herein can be implemented in a digital electronic circuit system, an integrated circuit system, a field programmable gate array (FPGA), an application specific integrated circuit (ASIC), application-specific standard product (ASSP), a system on chip system (SOC), a load programmable logic device (CPLD), a computer hardware, firmware, software, and/or a combination thereof. These various embodiments may include: being implemented in one or more computer programs, the one or more computer programs may be executed and/or interpreted on a programmable system including at least one programmable processor, the programmable processor may be a dedicated or general-purpose programmable processor that can receive data and instructions from a storage system, at least one input device, and at least one output device, and can transmit the data and instructions to the storage system, the at least one input device, and the at least one output device.

The program code used to implement the method of the present disclosure can be written in any combination of one or more programming languages. These program codes can be provided to the processors or controllers of general-purpose computers, special-purpose computers, or other programmable data processing devices, so that when the program codes are executed by the processors or controllers, the function/operation specified in the flowcharts and/or block diagrams is implemented. The program codes can be executed entirely on the machine, partly executed on the machine, as an independent software package partly executed on the machine and partly executed on the remote machine, or entirely executed on the remote machine or server.

In the context of the present disclosure, a machine-readable medium may be a tangible medium, which may contain or store a program for use by the instruction execution system, apparatus, or device or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of machine-readable storage media may include electrical connection based on one or more wires, portable computer disk, hard disk, random access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

In order to provide interaction with a user, the systems and technologies described herein may be implemented on a computer, where the computer has: a display apparatus (e.g., a CRT (cathode ray tube) or LCD (liquid crystal display) monitor) for displaying information to the user; and a keyboard and a pointing apparatus (e.g., a mouse or a trackball), through which the user can provide inputs to the computer. Other types of apparatuses may also be used to provide interaction with the user; for example, the feedback provided to the user may be any form of sensing feedback (such as, visual feedback, auditory feedback, or tactile feedback); and the input from the user may be received in any form (including acoustic input, voice input, tactile input).

The systems and technologies described here may be implemented in a computing system (e.g., a data server) including a back-end component, or in a computing system (e.g., an application server) including a middleware component, or in a computing system (e.g., a user computer having a graphical user interface or a web browser, through which the user can interact with the implementations of the systems and technologies described herein) including a front-end component, or in a computing system including any combination of the back-end component, the middleware component, or the front-end component. The components of the system may be interconnected via digital data communication (e.g., a communication network) in any form or medium. Examples of the communication network include: a local area network (LAN), a block-chain-based service network (BSN), a wide area network (WAN) and Internet.

A computer system may include a client and a server. The client and the server are generally located far away from each other and usually interact with each other through a communication network. A relationship between the client and the server is generated by computer programs running on corresponding computers and having a client-server relationship between each other. The server can be a cloud server, also known as a cloud computing server or a cloud host. It is a host product in the cloud computing service system to solve the defects about the difficulties in management and weak business scalability in the traditional physical host and virtual private server (VPS) services. The server can also be a server of a distributed system, or a server combined with block chain.

It should be understood that steps can be reordered, added, or deleted by using the various forms of processes shown above. For example, the steps recited in the present application can be performed in parallel, in sequence or in different orders, as long as expected results of the technical solutions disclosed by the present application can be realized, and there is no limitation herein.

The above specific implementations do not limit the protection scope of the present application. It should be understood by those skilled in the art that various modifications, combinations, sub-combinations and substitutions may be made according to design requirements and other factors. Any modification, equivalent replacement and improvement made within the principle of the present application shall be included in the protection scope of the present application.

## Claims

1. A schedule information acquiring method, comprising:
acquiring (S201) multiple subscription identification information respectively corresponding to multiple service instances;
for each subscription identification information corresponding to each service instance, requesting (S202) schedule information corresponding to the subscription identification information from a first server end through the service instance; and
sending (S203) the schedule information to a terminal corresponding to the subscription identification information.

2. The method according to claim 1, wherein the acquiring (S201) multiple subscription identification information respectively corresponding to multiple service instances comprises:
acquiring a number of the service instances and the number of copies, wherein the number of the copies is used to indicate the number of the service instances corresponding to the same subscription identification information;
acquiring the number of groups, and grouping all the subscription identification information according to the number of the groups; and
determining the grouped multiple subscription identification information respectively corresponding to the multiple service instances according to the number of the service instances, the number of the copies, and the number of the groups.

3. The method according to claim 2, wherein the determining the grouped multiple subscription identification information respectively corresponding to the multiple service instances according to the number of the service instances, the number of the copies, and the number of the groups comprises:
determining a target number according to the number of the groups, the number of the copies, and the number of the service instances;
dividing all the groups into multiple shards, wherein each shard comprises different groups of the target number, the number of times that each group appears in all shards is the number of the copies; and
determining an identification of the service instance corresponding to each shard, and distributing the subscription identification information comprised in each shard to the corresponding service instance according to the identification of the service instance.

4. The method according to claim 3, wherein the distributing the subscription identification information comprised in each shard to the corresponding service instance according to the identification of the service instance comprises:
determining an identification of a successfully started service instance according to a starting order of the service instances; and
distributing a shard corresponding to the successfully started service instance to the successfully started service instance according to the identification of the service instance corresponding to each shard and the identification of the successfully started service instance.

5. The method according to claim 4, further comprising:
distributing a group corresponding to a first service instance to the successfully started service instance one by one, wherein the group corresponding to one successfully started service instance does not comprise the same group corresponding to the first service instance, and the first service instance is a service instance that is not successfully started or a service instance that has been successfully started and stopped after a period of time; and
requesting to acquire a group corresponding to the first service instance from other successfully started service instances one by one after the first service instance is successfully started again.

6. The method according to any one of claims 2 to 5, wherein the sending (S203) the schedule information to a terminal corresponding to the subscription identification information comprises:
sending the schedule information acquired by the service instances with the same group to the terminal corresponding to the subscription identification information after de-duplicating the schedule information.

7. A schedule information acquiring apparatus (300), comprising:
an acquiring module (301), configured to acquire multiple subscription identification information respectively corresponding to multiple service instances;
a subscription module (302), configured to, for each subscription identification information corresponding to each service instance, request schedule information corresponding to the subscription identification information from a first server end through the service instance; and
a sending module (303), configured to send the schedule information to a terminal corresponding to the subscription identification information.

8. The apparatus according to claim 7, wherein the acquiring module (301) comprises:
a first acquiring unit, configured to acquire a number of the service instances and the number of copies, wherein the number of the copies is used to indicate the number of the service instances corresponding to the same subscription identification information;
a second acquiring unit, configured to acquire the number of groups, and grouping all the subscription identification information according to the number of the groups; and
a determining unit, configured to determine the grouped multiple subscription identification information respectively corresponding to the multiple service instances according to the number of the service instances, the number of the copies, and the number of the groups.

9. The apparatus according to claim 8, wherein the determining unit comprises:
a first determining subunit, configured to determine a target number according to the number of the groups, the number of the copies, and the number of the service instances;
a sharding unit, configured to divide all the groups into multiple shards, wherein each shard comprises different groups of the target number, the number of times that each group appears in all shards is the number of the copies; and
a distributing unit, configured to determine an identification of the service instance corresponding to each shard, and distribute the subscription identification information comprised in each shard to the corresponding service instance according to the identification of the service instance.

10. The apparatus according to claim 9, wherein the distributing unit comprises:
a second determining subunit, configured to determine an identification of a successfully started service instance according to a starting order of the service instances; and
a first distributing subunit, configured to distribute a shard corresponding to the successfully started service instance to the successfully started service instance according to the identification of the service instance corresponding to each shard and the identification of the successfully started service instance.

11. The apparatus according to claim 10, further comprising:
a second distributing subunit, configured to distribute a group corresponding to a first service instance to the successfully started service instance one by one, wherein the group corresponding to one successfully started service instance does not comprise the same group corresponding to the first service instance, and the first service instance is a service instance that is not successfully started or a service instance that has been successfully started and stopped after a period of time; and
a third distributing subunit, configured to request to acquire a group corresponding to the first service instance from other successfully started service instances one by one after the first service instance is successfully started again.

12. The apparatus according to any one of claims 8 to 11, the sending module (303) comprises:
a sending unit, configured to send the schedule information acquired by the service instances with the same group to the terminal corresponding to the subscription identification information after the schedule information is de-duplicated.

13. An electronic device, comprising:
at least one processor; and a memory communicatively connected with the at least one processor;
wherein, the memory stores instructions executable by the at least one processor, and the instructions are executed by the at least one processor, to cause the at least one processor to perform the method according to any one of claims 1 to 6.

14. A non-transitory computer-readable storage medium storing thereon computer instructions, wherein the computer instructions are used to cause a computer to perform the method according to any one of claims 1 to 6.

15. A computer program product, comprising a computer program, wherein the computer program, when executed by a processor, implements the method according to any one of claims 1 to 6.
